# FASCICULE DE BREVET EUROPEEN

(11) **EP 3 167 640 B1**
(45) Date de publication et mention de la délivrance du brevet: **12.09.2018**
(21) Numéro de dépôt: 15736459.7
(22) Date de dépôt: 08.07.2015
(51) Int. Cl.: H04W 12/10, H04L 29/06, B64C 39/02, G01C 15/00, G08G 5/00, G05D 1/00

(54) **SYSTÈME POUR SYSTEMES TELEOPERES**
SYSTEM FÜR FERNGESTEUERTE SYSTEME
SYSTEM FOR REMOTE-CONTROLLED SYSTEMS

(30) Priorité: 08.07.2014 FR 1401530
(43) Date de publication de la demande: 17.05.2017
(73) Titulaire: Safran Electronics & Defense, 92100 Boulogne-Billancourt (FR)
(72) Inventeur: SOULIER, Jérémie, F-92100 Boulogne-Billancourt (FR)
(74) Mandataire: Regimbeau
(86) Numéro de dépôt international: PCT/EP2015/065638
(87) Numéro de publication internationale: WO 2016/005469

(56) Documents cités:
- EP-A1- 1 956 451
- WO-A2-2011/080517
- US-A1- 2008 172 744
- US-A1- 2014 068 770

## Description

### DOMAINE TECHNIQUE GÉNÉRAL ET ART ANTÉRIEUR

La présente invention est relative aux systèmes télé-opérés tels que des drones aériens ou terrestres.

Les systèmes télé-opérés sont équipés de liaisons de données qui sont soit des liaisons de données internes que le téléopérateur contrôle totalement, soit des liaisons de données externes par rapport au téléopérateur (SATCOM par exemple).

Dans le cas d'une liaison de données externe, l'intégrité de la liaison n'est pas contrôlée.

A ce jour, seule l'utilisation d'une liaison de données interne permet au téléopérateur de garantir l'intégrité de l'information transmise au véhicule télé-opéré et de certifier l'ensemble du système.

Cette certification nécessite malgré tout le déploiement de moyens importants et peut s'avérer d'un coût prohibitif.

En particulier, les systèmes télé-opérés sont appelés à réaliser leur mission de façon de plus en plus automatisée en faisant appel à des algorithmes de navigation potentiellement très évolutifs pas nécessairement déterministes (ou dont la convergence ne sera pas démontrable) basés sur des informations multi-capteurs.

Les interfaces opérateurs au sol sont quant à elles complexes et potentiellement hétérogènes (dans la majorité des cas ces interfaces/supports ne sont pas certifiables).

Un but général de l'invention est de résoudre ces problématiques et de proposer une architecture permettant une certification de la chaîne de contrôle et de commande à moindre coût.

En particulier, le téléopérateur qui a le contrôle effectif du véhicule opéré doit maîtriser les paramètres de sécurité du vol et notamment
- avoir la maîtrise de la trajectoire du véhicule (pas de sortie de zone de celui-ci),
- avoir la maîtrise de la zone de retombée en cas de panne moteur ou de « crash » (il faut bien entendu éviter tout « crash » incontrôlé pour ne pas risquer des accidents sur des zones interdites telles que des zones fortement peuplées et permettre, en cas de difficultés, d'optimiser un atterrissage sur des zones plus propices),
- surveiller en permanence l'état des différents sous-ensembles impliqués dans la sécurité du vol (énergie, motorisation, liens de contrôle, navigation, ...).

Le document US 2003/227395 décrit un dispositif de sécurité permettant de s'assurer qu'un véhicule évolue dans une enveloppe de sécurité prédéterminée. Le dispositif comprend un centre de communication et de commande au sol et un système embarqué dans le véhicule capable de communiquer avec le centre de communication et de commande au sol via une liaison de données. Le centre de communication et de commande au sol peut transmettre au système embarqué des données relatives à des zones de sécurité qui sont par exemple définies comme des zones de sécurité exclusives entourant d'autres véhicules. La pénétration du véhicule dans une telle zone de sécurité provoque une action du véhicule, comme par exemple, dans le cas d'un avion, une commande tendant à faire virer l'avion.

### PRÉSENTATION GÉNÉRALE DE L'INVENTION

L'invention est définie dans les revendications indépendantes. A cet effet, l'invention propose un système télé-opéré comportant :
- au moins une interface au sol à partir de laquelle un opérateur peut commander un véhicule télé-opéré,
- au moins un ensemble de mission dans ledit véhicule,
- une liaison de données entre ladite interface et ledit ensemble de mission,
caractérisé en ce qu'il comporte au sol et dans le véhicule des systèmes de contrôle de sécurité adaptés pour signer et/ou authentifier des données et/ou commandes critiques échangées entre le sol et le véhicule, et/ou pour vérifier l'intégrité de ces données, et en ce que l'un des systèmes de contrôle de sécurité dans le véhicule est adapté pour vérifier si le véhicule télé-opéré est maintenu dans une enveloppe de sécurité prédéfinie par le sol et pour déclencher une action prédéterminée lorsque ce n'est pas le cas..

L'authentification et la signature des données permettent de fournir au téléopérateur les moyens de garantir les commandes reçues à bord et l'information utilisée pour la prise de décision (position avion, état des sous-ensembles critiques).

La vérification de l'intégrité permet de garantir que les ordres émis par le téléopérateur, comme les informations qu'il reçoit, n'ont pas été modifiés par la chaîne de transmission.

Ainsi, il est possible d'utiliser au sol comme à bord du véhicule des interfaces et ensembles de missions de faible niveau de criticité, en même temps que des interfaces et ensembles de mission de plus haut niveau de criticité.

Dans une variante possible de l'invention, il est prévu une chaîne de liaison de données de sécurité indépendante afin de permettre de déclencher une action sécurité prédéterminée à partir du sol.

Dans une autre variante encore, le système de contrôle de sécurité du véhicule est adapté pour réceptionner une série d'ordres simples en provenance du contrôle aérien.

### PRÉSENTATION DES FIGURES

D'autres caractéristiques et avantages de l'invention ressortiront encore de la description qui suit, laquelle est purement illustrative et non limitative, et doit être lue en regard des figures annexées sur lesquelles :
- la figure 1 illustre un schéma de principe d'une mise en oeuvre possible de l'invention ;
- les figures 2 et 3 illustrent deux autres modes de mise en oeuvre possible de l'invention.

### DESCRIPTION D'UN OU PLUSIEURS MODES DE RÉALISATION

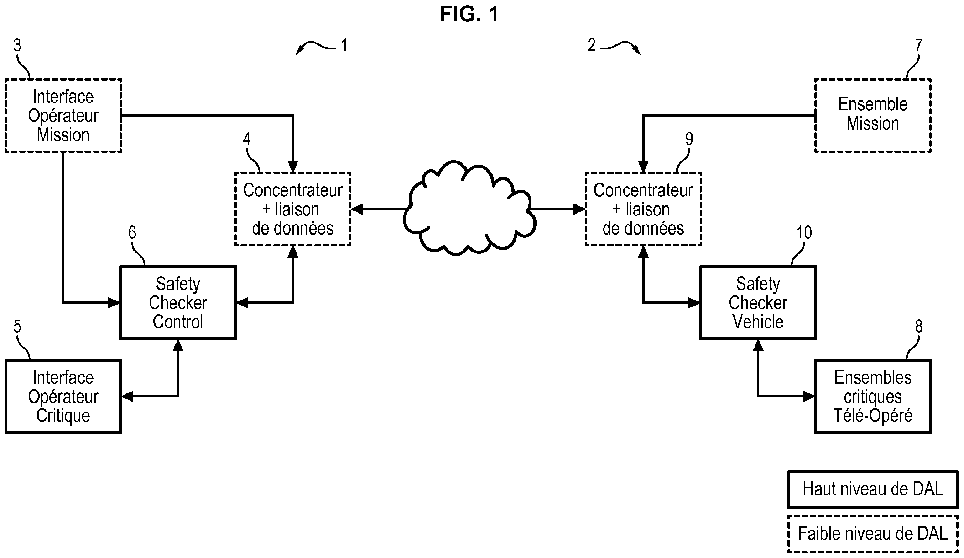

L'architecture illustrée sur la figure 1 comporte une partie 1 au sol et une partie 2 sur le véhicule télé-opéré.

Au sol, l'architecture comprend au moins une interface 3 à partir de laquelle un opérateur peut commander le véhicule télé-opéré, un concentrateur 4 permettant d'assurer la liaison de données avec le véhicule, ainsi qu'une interface 5 qui est d'un niveau de criticité (DAL ou « Development Assurance Level » selon la terminologie anglo-saxonne) plus élevé que l'interface 3 et le concentrateur 4.

Un système de contrôle de sécurité 6 est prévu au sol. Ce système est également d'un niveau de criticité élevé et a les fonctions suivantes :
- il signe les commandes critiques émises par l'une ou l'autre des interfaces 3 et 5 à destination du bord du véhicule (mise en oeuvre d'un chiffrement) ;
- il vérifie l'intégrité des données d'état reçues régulièrement du bord (position, statut de l'équipement, etc.). La vérification d'intégrité se fait à la fois spatialement et temporellement. L'état reçu du bord est alors classé par le système selon trois états : fonctionnel, dégradé, non-fonctionnel ;
- il vérifie la cohérence entre la commande émise vers le bord et le retour de commande qui est transmis du bord par l'ensemble critique de celui-ci ;
- il transmet régulièrement au bord des requêtes d'authentification (mise en oeuvre d'une fonction challenge) ;
- il recopie les consignes émises par l'interface de mission 5 à destination du bord afin de contrôler celles-ci (boucle courte de sécurité).

Une architecture similaire est également prévue à bord du véhicule. Ce dernier intègre à cet effet un ou plusieurs ensembles de mission 7 de faible niveau de criticité, un ou plusieurs ensembles de mission 8 à haut niveau de criticité, un concentrateur 9 permettant d'assurer la liaison avec le sol, et un système de sécurité 10.

Ce système de contrôle de sécurité 10 est également à haut niveau de criticité et met en oeuvre les contrôles suivants :
- il diffuse vers l'ensemble critique 8 la commande en provenance du sol après décodage ;
- il vérifie l'intégrité de cette commande avant sa diffusion vers l'ensemble critique 8 ;
- il émet régulièrement à destination des interfaces 3 et 5 au sol des demandes d'authentification (challenge) ;
- il vérifie la validité temporelle des commandes en provenance du sol (vieillissement) ;
- il émet vers le sol des acquittements de consignes de l'ensemble critique 8 télé-opéré ;
- il signe les contrôles et statuts issus de l'ensemble critique télé-opéré 8.

On notera ici que les composants et les algorithmes signant les commandes depuis le sol et signant les contrôles depuis le bord sont identiques.

Des clés hautement sécurisées et des algorithmes mathématiques robustes sont utilisés pour assurer que la probabilité de recevoir des ordres/états erronés sans pouvoir les détecter soit très faible (inféreiure à un niveau équivalent à la fonction qu'il sert).

Les boîtiers des différentes unités de traitement utilisés disposent d'une horloge interne précise initialisée sur une même base de temps. L'horloge de ces boîtiers est choisie robuste à la perte de référence.

Par ailleurs, le système de sécurité 10 du véhicule est capable de vérifier si le véhicule est maintenu dans une enveloppe de sécurité (zone tridimensionnelle, statut critique...) prédéfinie par le sol.

Le véhicule télé-opéré comprend un système de navigation, incluant un récepteur de positionnement par satellite (de type GPS par exemple), et une centrale inertielle.

Le véhicule télé-opéré comprend également un module de traitement configuré pour déterminer, à partir des signaux de position générés par le système de navigation et par la centrale inertielle, des données de position instantanée du véhicule. Les données de position du véhicule incluent des données représentatives des coordonnées spatiales instantanées du véhicule (latitude, longitude et altitude), ainsi qu'éventuellement un rayon de protection. Le rayon de protection définit un volume autour de la position définie par les coordonnées instantanées, dans lequel se trouve le véhicule, compte tenu des incertitudes liées à la mesure.

Les données de position du véhicule sont transmises par le module de traitement au système de contrôle de sécurité 10.

Le système de contrôle sécurité 10 compare les données de position qu'il reçoit du module de traitement avec des données représentative de l'enveloppe de sécurité définie et transmises par le sol.

Dans le cas où les commandes en provenance du bord ou les états du sous-ensemble critique 8 ne sont pas conformes à cette enveloppe de sécurité, le système 10 déclenche une action prédéterminée (isolation des commandes extérieures et/ou applications des règles de sécurité, par exemple).

Les données représentatives de l'enveloppe de sécurité peuvent comprendre des gammes de latitude, longitude et altitude, dans lesquelles doit être positionné le véhicule télé-opéré.

Selon une première possibilité, le rayon de protection est calculé par le module de traitement situé à bord du véhicule.

Dans ce cas, le rayon de protection est transmis par le module de traitement au système de contrôle de sécurité 10 à bord du véhicule avec les données de position.

Les données de position, incluant le rayon de protection, sont transmises par le système de contrôle de sécurité 10 situé à bord au système de contrôle de sécurité 6 situé au sol.

En retour, le système de contrôle de sécurité 6 situé au sol transmet au système de contrôle de sécurité 10 situé à bord les données représentatives de l'enveloppe de sécurité, pour permettre au système de contrôle de sécurité 10 situé à bord de vérifier que le véhicule télé-opéré est maintenu dans l'enveloppe de sécurité.

L'enveloppe de sécurité peut être déterminée au sol à partir des données de position transmises par le système de contrôle de sécurité 10 situé à bord.Les données de position du véhicule et les données représentatives de l'enveloppe de sécurité échangées entre le sol et le véhicule sont signées par le système de contrôle émetteur et authentifiées par le système de contrôle récepteur.

Selon une deuxième possibilité, le rayon de protection est calculé par un module de traitement situé au sol.

Cette deuxième possibilité peut être utile en particulier si le calcul du rayon de protection doit prendre en compte le fait qu'un ou deux satellites GNSS peuvent être en panne. Ce calcul nécessite d'utiliser un système de traitement complexe, incluant une banque de filtres importante qu'il peut être avantageux de déporter au sol, où les moyens disponibles n'ont pas les mêmes limitations que ceux embarqués sur le véhicule et peuvent permettre de traiter plusieurs véhicules à la fois.

Dans ce cas, les coordonnées spatiales du véhicule sont transmises par le système de contrôle de sécurité 10 situé à bord au système de contrôle de sécurité 6 situé au sol.

Le module de traitement situé au sol calcule le rayon de protection en fonction des coordonnées spatiales instantanées du véhicule (latitude, longitude et altitude, données de distance GNSS aux différents satellites visibles), ainsi que les données représentatives de l'enveloppe de protection.

Le système de contrôle de sécurité 6 situé au sol transmet au système de contrôle de sécurité 10 situé à bord les données représentatives du rayon de protection et de l'enveloppe de sécurité, pour permettre au système de contrôle de sécurité 10 situé à bord de vérifier que le véhicule télé-opéré est maintenu dans l'enveloppe de sécurité.

Les données de position du véhicule et les données représentatives du rayon de protection et de l'enveloppe de sécurité échangées entre le sol et le véhicule sont signées par le système de contrôle émetteur et authentifiées par le système de contrôle récepteur.

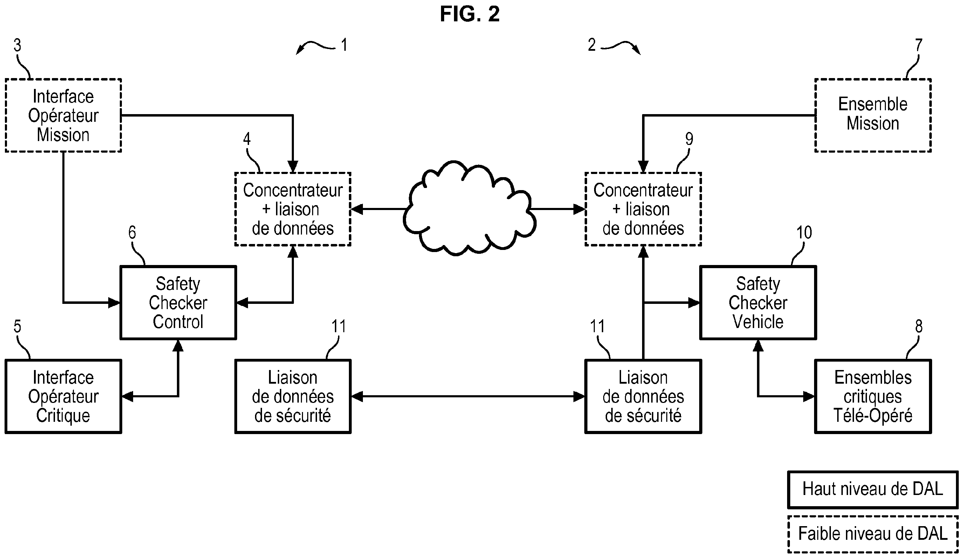

Dans une autre variante encore (figure 2 - chaîne dédiée de secours du système), le système 10 est capable de réceptionner un ordre simple (type discret depuis une chaîne 11 de liaison de données de sécurité indépendante). Dans ce cas, le système déclenche une action prédéterminée (ex.: isolation des commandes extérieures et/ou applications des règles de sécurité).

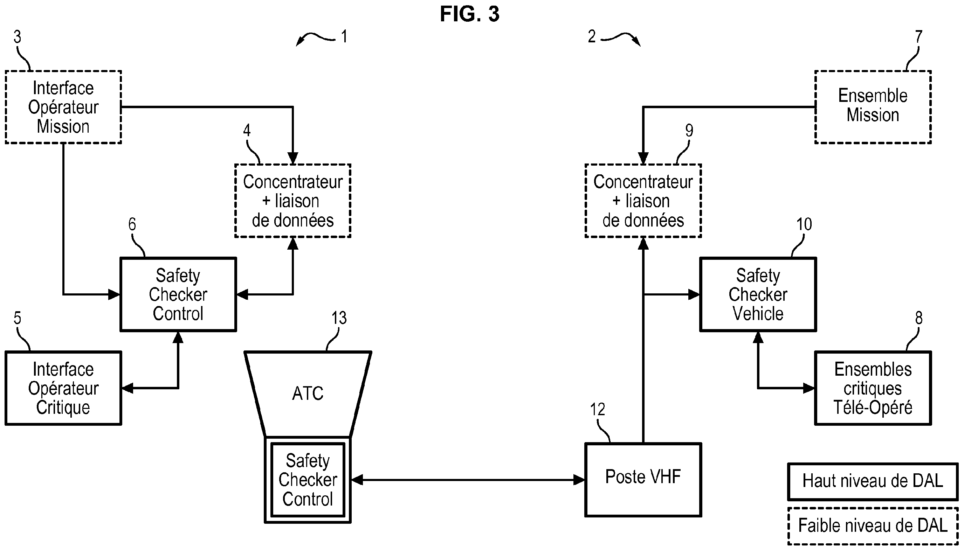

Dans une troisième variante également (figure 3 - prise de contrôle par le contrôle aérien), dans le cas d'une perte de contrôle de la station de contrôle (involontaire ou volontaire), le système de sécurité du véhicule est capable de réceptionner une série d'ordres simples en provenance du contrôle aérien (poste ATC 13) via un lien « VHF » (poste 12).

L'authenticité de ces commandes est vérifiée par un mécanisme de signature sur la base de clés échangées entre l'ATC et le téléopérateur au préalable.

## Revendications

1. Système télé-opéré comportant :
- au moins une première interface au sol (3) à partir de laquelle un opérateur peut commander un véhicule télé-opéré,
- une deuxième interface au sol (5) présentant un niveau de criticité plus élevé que la première interface au sol (3),
- au moins un ensemble de mission (7, 8) dans ledit véhicule,
- une liaison de données entre ladite interface (3, 5) et ledit ensemble de mission (7, 8),
le système comportant un système de contrôle de sécurité (10) dans le véhicule, adapté pour vérifier si le véhicule télé-opéré est maintenu dans une enveloppe de sécurité prédéfinie par le sol et pour déclencher une action prédéterminée lorsque ce n'est pas le cas,
le système comportant également au sol un système de contrôle de sécurité (6), et en ce que les systèmes de contrôle de sécurité au sol et dans le véhicule (6, 10) sont adaptés pour signer et/ou authentifier des données et/ou commandes critiques échangées entre le sol et le véhicule, et/ou pour vérifier l'intégrité de ces données, le système de contrôle de sécurité (6) au sol étant adapté pour vérifier la cohérence entre les données de commande émises à destination du bord du véhicule et un retour de commande qui est transmis du bord du véhicule par un ensemble critique télé-opéré (8).

2. Système selon la revendication 1, **caractérisé en ce que** le système de contrôle de sécurité (6) au sol est adapté pour signer les commandes critiques émises par l'une ou l'autre des interfaces (3, 5) à destination du bord du véhicule et pour vérifier l'intégrité des données d'état reçues du bord.

3. Système selon l'une des revendications précédentes, **caractérisé en ce que** le système de contrôle de sécurité (6) au sol est adapté pour recopier et contrôler des données de commande émises à destination du bord par une interface opérateur de mission de haute criticité (5).

4. Système selon l'une des revendications précédentes, **caractérisé en ce que** le système de contrôle de sécurité (10) à bord du véhicule est adapté pour authentifier les données de commande à destination d'un ensemble télé-opéré de haute criticité (8) à bord du véhicule et vérifier leur intégrité.

5. Système selon l'une des revendications précédentes, **caractérisé en ce que** le système de contrôle de sécurité (10) à bord du véhicule est adapté pour vérifier la validité temporelle des commandes en provenance du sol.

6. Système selon l'une des revendications précédentes, **caractérisé en ce que** le système de contrôle de sécurité (10) à bord du véhicule est adapté pour émettre vers le sol des acquittements de consignes d'un ensemble critique (8) à bord du véhicule télé-opéré.

7. Système selon l'une des revendications précédentes, **caractérisé en ce que** le système de contrôle de sécurité (10) à bord du véhicule est adapté pour signer les contrôles et statuts issus d'un ensemble critique (8) à bord du véhicule télé-opéré.

8. Système selon l'une des revendications précédentes, **caractérisé en ce qu'**un système de contrôle de sécurité (6) au sol (respectivement à bord du véhicule) est adapté pour transmettre régulièrement au bord (respectivement au sol) des requêtes d'authentification.

9. Système selon l'une des revendications précédentes, **caractérisée en ce qu'**elle comporte en outre une chaîne de liaison de données de sécurité indépendante (11) afin de permettre de déclencher une action sécurité prédéterminée à partir du sol.

10. Système selon l'une des revendications précédentes, **caractérisée en ce que** le système de contrôle de sécurité du véhicule (10) est adapté pour réceptionner une série d'ordres simples en provenance du contrôle aérien (13).

## Patentansprüche

1. Ferngesteuertes System, das Folgendes umfasst:
- zumindest eine erste Bodenschnittstelle (3), über die ein Bediener ein ferngesteuertes Fahrzeug steuern kann,
- eine zweite Bodenschnittstelle (5) mit einem höheren Kritikalitätsniveau als die erste Bodenschnittstelle (3),
- zumindest eine Einsatzanordnung (7, 8) im Fahrzeug,
- eine Datenverbindung zwischen der Schnittstelle (3, 5) und der Einsatzanordnung (7, 8),
wobei das System ein Sicherheitskontrollsystem (10) im Fahrzeug umfasst, das zur Überprüfung geeignet ist, ob das ferngesteuerte Fahrzeug in einem vom Boden vorgegebenen Sicherheitsbereich gehalten wird, und zur Auslöser eine vorbestimmte Aktion, wenn dies nicht der Fall ist,
wobei das System ebenfalls auf dem Boden ein Sicherheitskontrollsystem (6) umfasst und dass die Sicherheitskontrollsysteme am Boden und im Fahrzeug (6, 10) geeignet sind, Daten oder kritische Befehle zu signieren und/oder zu authentifizieren, die zwischen dem Boden und dem Fahrzeug ausgetauscht werden, und/oder die Unversehrtheit dieser Daten zu überprüfen, wobei das Sicherheitskontrollsystem (6) am Boden geeignet ist, die Kohärenz zwischen den an Bord des Fahrzeugs gerichteten Steuerdaten und einer Befehlsrückgabe zu überprüfen, die von Bord des Fahrzeugs durch eine ferngesteuerte kritische Anordnung (8) übertragen wird.

2. System nach Anspruch 1, **dadurch gekennzeichnet, dass** das Sicherheitskontrollsystem (6) am Boden geeignet ist, kritische Befehle zu signieren, die von der einen oder der anderen Schnittstelle (3, 5) an Bord des Fahrzeugs ausgegeben werden, und die Unversehrtheit der vom Bord empfangenen Zustandsdaten zu überprüfen.

3. System nach einem der vorstehenden Ansprüche, **dadurch gekennzeichnet, dass** das Sicherheitskontrollsystem (6) am Boden geeignet ist, an Bord gerichteten Steuerdaten zu kopieren und zu kontrollieren, die über eine Bedienerschnittstelle für hochkritische Einsätze (5) übertragen werden.

4. System nach einem der vorstehenden Ansprüche, **dadurch gekennzeichnet, dass** das Sicherheitskontrollsystem (10) an Bord des Fahrzeugs geeignet ist, die Steuerdaten für eine hochkritische ferngesteuerte Anordnung (8) an Bord des Fahrzeugs zu authentifizieren und ihre Unversehrtheit zu überprüfen.

5. System nach einem der vorstehenden Ansprüche, **dadurch gekennzeichnet, dass** das Sicherheitskontrollsystem (10) an Bord des Fahrzeugs geeignet ist, die zeitliche Gültigkeit der vom Boden kommenden Befehle zu überprüfen.

6. System nach einem der vorstehenden Ansprüche, **dadurch gekennzeichnet, dass** das Sicherheitskontrollsystem (10) an Bord des Fahrzeugs geeignet ist, Quittierungen von Anweisungen einer kritischen Anordnung (8) an Bord des ferngesteuerten Fahrzeugs an den Boden zu übertragen.

7. System nach einem der vorstehenden Ansprüche, **dadurch gekennzeichnet, dass** das Sicherheitskontrollsystem (10) an Bord des Fahrzeugs geeignet ist, die aus einer kritischen Anordnung (8) an Bord des ferngesteuerten Fahrzeugs resultierenden Kontrollen und Zustände zu signieren.

8. System nach einem der vorstehenden Ansprüche, **dadurch gekennzeichnet, dass** das Sicherheitskontrollsystem (6) am Boden (beziehungsweise an Bord des Fahrzeugs) geeignet ist, die Authentifizierungsabfragen regelmäßig an Bord (beziehungsweise an den Boden) zu übertragen.

9. System nach einem der vorstehenden Ansprüche, **dadurch gekennzeichnet, dass** es ferner eine unabhängige Sicherheitsdaten-Verbindungskette (11) umfasst, um eine vorbestimmte Sicherheitsmaßnahme vom Boden aus einzuleiten.

10. System nach einem der vorstehenden Ansprüche, **dadurch gekennzeichnet, dass** das Fahrzeugsicherheitskontrollsystem (10) geeignet ist, eine Reihe von einfachen Befehlen von der Flugsicherung (13) zu empfangen.

## Claims

1. A remotely-operated system including:
- at least one first interface on the ground (3) from which an operator may control a remotely-operated vehicle,
- one second interface on the ground (5) having a higher criticality level than the first interface on the ground (3),
- at least one mission assembly (7, 8) in said vehicle,
- a data link between said interface (3, 5) and said mission assembly (7, 8),
the system including a safety checking system (10) in the vehicle, adapted for checking whether the remotely-operated vehicle is maintained in a safety coverage predefined by the ground and for triggering a predetermined action when this is not the case,
the system also including on the ground a safety checking system (6) and in that the safety checking systems (6, 10) on the ground and in the vehicle are adapted for signing and/or authenticating critical data and/or commands exchanged between the ground and the vehicle, and/or for checking the integrity of these data, the safety checking system (6) on the ground being adapted for checking the consistency between the emitted command data intended for on-board the vehicle and a command return which is transmitted from on-board the vehicle by a remotely-operated critical assembly (8).

2. The system according to claim 1, **characterized in that** the safety checking system (6) on the ground is adapted for signing the critical commands emitted by either one of the interfaces (3, 5) intended for on-board the vehicle and for checking the integrity of the state data received from on-board.

3. The system according to one of the preceding claims, **characterized in that** the safety checking system (6) on the ground is adapted for copying and controlling emitted command data intended for on-board by a mission operator interface of high criticality (5).

4. The system according to one of the preceding claims, **characterized in that** the safety checking system (10) on-board the vehicle is adapted for authenticating the command data intended for a remotely-operated assembly of high criticality (8) on-board the vehicle and for checking their integrity.

5. The system according to one of the preceding claims, **characterized in that** the safety checking system (10) on-board the vehicle is adapted for checking the temporal validity of the commands from the ground.

6. The system according to one of the preceding claims, **characterized in that** the safety checking system (10) on-board the vehicle is adapted for emitting to the ground acknowledgments of instructions from a critical assembly (8) on-board the remotely-operated vehicle.

7. The system according to one of the preceding claims, **characterized in that** the safety checking system (10) on-board the vehicle is adapted for signing the controls and statuses issued from a critical assembly (8) on-board the remotely-operated vehicle.

8. The system according to one of the preceding claims, **characterized in that** a safety checking system (6) on the ground (respectively on-board the vehicle) is adapted for regularly transmitting to on-board (respectively to the ground) authentication requests.

9. The system according to one of the preceding claims, **characterized in that** it further includes an independent safety data link chain (11) in order to allow triggering of a predetermined safety action from the ground.

10. The system according to one of the preceding claims, **characterized in that** the safety checking system of the vehicle (10) is adapted for receiving a series of simple orders from the air traffic control (13).
